# EUROPEAN PATENT APPLICATION

(11) **EP 3 021 232 A1**
(43) Date of publication of application: **18.05.2016**
(21) Application number: 15160715.7
(22) Date of filing: 25.03.2015
(51) Int. Cl.: G06F 17/30

(54) **System and method for curation of content**

(30) Priority: 12.11.2014 IN MU35712014
(71) Applicant: Tata Consultancy Services Ltd., Mumbai 400 021, Maharashtra (IN)
(72) Inventor: Suresh, Sandeep Krishna, 400076 Mumbai (IN); Das, Rajashree, 400076 Mumbai (IN)
(74) Representative: Regimbeau

(57) **Abstract**

Method(s) and system(s) for collaboration of content are described herein. The system (102) includes a dynamic content editor (108) coupled to a processor (202) to generate a graphical user interface including interactive elements for receiving user inputs for relating contents in a content repository (112) and specifying a layout of display of curated contents. The system (102) further includes a content processing engine (110) coupled to the processor (202) to build relationships between the contents in the content repository (112), based on the user inputs, data and metadata of the contents; and provide the curated contents to a user based on the relationships and the specified layout of display.

## Description

### TECHNICAL FIELD

The present subject matter relates, in general, to content collaboration and in particular to curation of content for collaboration.

### BACKGROUND

Content collaboration, in general, refers to creation, development, or sharing of information by users, such as individuals or corporations, collaboratively. The content may be of various types such as audio content, video content, text files, web pages including Extensible HyperText Markup Language (XHTML) files or HyperText Markup Language (HTML) files, image files, video files and the like. Such content can be shared by a user through social business tools or other communication tools to improve the quality, depth, and reach of the work done by the user through collective effort. Social business tools enable a user to upload content for collaboration and to share the uploaded content with other users. Other communication tools can include, for example, company Intranet, web portals, etc. With the exponential increase in the types and amount of content being collaborated upon, the content is generally curated, i.e., collected, organized, and displayed, based on the topic to which the content is related, so that users can receive, view, and utilize the content in a meaningful way.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the figures to reference like features and components.
Fig. 1 illustrates a computing environment implementing a content collaboration system, in accordance with an implementation of the present subject matter.
Fig. 2 illustrates a system for content collaboration, in accordance with an implementation of the present subject matter.
Figs. 3a, 3b, and 3c illustrate example graphical user interfaces (GUIs) for content collaboration, in accordance with an implementation of the present subject matter.
Fig. 3d illustrates example content relationship map, in accordance with an implementation of the present subject matter.
Fig. 4 illustrates a method for content curation and collaboration, in accordance with an implementation of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in a non-transitory computer readable medium and so executed by a computing device or processor, whether or not such computing device or processor is explicitly shown.

### DETAILED DESCRIPTION

The present subject matter relates to methods and systems for content collaboration to share content between users, such as individuals, organizations, and corporations. Content collaboration can include obtaining information or content from multiple content sources and sharing the information or content with other users. The contents exchanged may include audio content, video content, text files, web pages, such as Extensible HyperText Markup Language (XML) files, Java Server Pages (JSP) files, Active Server Pages (ASP) files, or HyperText Markup Language (HTML) files, image files, and the like. Content, as used herein, may be an individual file or may be a combination of several files or content to develop curated content. Content may also be a combination of multiple types of files. A file may be any data resource used for storing and accessing data by a computing system and may include one or more types of data, such as audio, video, text, image, hyperlinks, and the like.

In one implementation, content may be exchanged using a social business tool or a social media platform or other enterprise communication tools. Such tools or platforms are typically based on a content exchange platform that is simultaneously accessible to and usable by a number of users. For example, the content in one or more data repositories may be made accessible to users of the social media platform through interactive user interfaces. The various users can independently perform actions on the content, such as view, comment, edit, add, delete, and link to other content, based on their access rights and privileges provided by the platform. With the increase in the amount of content being exchanged, it is often difficult for users to identify relevant content for collaboration. Hence, content curation techniques are being developed to identify and display related content together.

Conventional methods and systems for content collaboration use semantic analysis and collaborative filtering techniques to relate content of a particular type for curation. For example, videos on similar topics may be related or linked together so that when a user views a particular video, the other videos are also suggested for viewing. In the same way, images on similar topics may be related to each other or web pages on similar topics may be linked to each other. However, conventional systems and methods do not allow for relating and assimilating content of different types that are related to the same topic. Further, the content curation cannot be done dynamically, i.e., as and when new content of different types are added by users. Moreover, the conventional systems and methods are platform dependent and use a fixed framework for curating content of a particular type. With the proliferation of content over the Internet, private data networks, and other data sources, today content is available in various forms and over different platforms. Hence content collaboration by the conventional systems and methods can result in duplication of content, omission of pertinent content, and/or providing irrelevant content to a user.

The present subject matter describes methods and systems for curation of content for collaboration. The content, which may be digital documents or digital files, may be curated according to the present subject matter that takes into account relationships between the different contents irrespective of the type of content. The methods and systems described herein can be implemented on computing devices, such as a server, a desktop, a laptop, a personal digital assistant, a smart phone, or the like.

In one implementation, relationships between different contents in a content repository may be identified for curation of the contents. The content repository may include one or more data repositories that can use different file systems for data storage. The content repository can also be a distributed data storage system. For content curation, as per the present subject matter, a graphical user interface is provided that allows the user to select the contents to be related, define the relationships between the contents for curation, define how the curated contents and associated metrics can be displayed to users, etc. The curation of contents thus achieved is independent of the type of content or files and thus it increases the flexibility of content curation for collaboration. Also, when new content is added to the content repository, it can be easily related to the curated content present in the content repository, thus making it possible to dynamically relate contents in the repository and making it easier for users to collaborate.

Further, the relationships identified between contents can include parent-child relationships where one or more contents are identified as parent content and other contents are identified as child content for respective parent content. The parent-child relationship can include one or more hierarchy levels between the parent content and the child content. Further, the parent-child relationships can also be of different types, such as one-to-many, many-to-many, one-to-one, many-to-one. Additionally, a non-hierarchical one-to-other relationship may also be created. Accordingly, the contents in the content repository may be related to each other based on the identified relationships and can be organized and displayed together when a search is conducted for a particular topic in the content repository.

Thus, the present subject matter provides for flexible and dynamic content curation and collaboration. The methods and systems of present subject matter are further described in conjunction with the following figures. It should be noted that the description and figures merely illustrate the principles of the present subject matter. It will thus be appreciated that various arrangements that embody the principles of the present subject matter, although not explicitly described or shown herein, can be devised from the description and are included within its scope. Moreover, all statements herein reciting principles, aspects, and embodiments of the present subject matter, as well as specific examples thereof, are intended to encompass equivalents thereof.

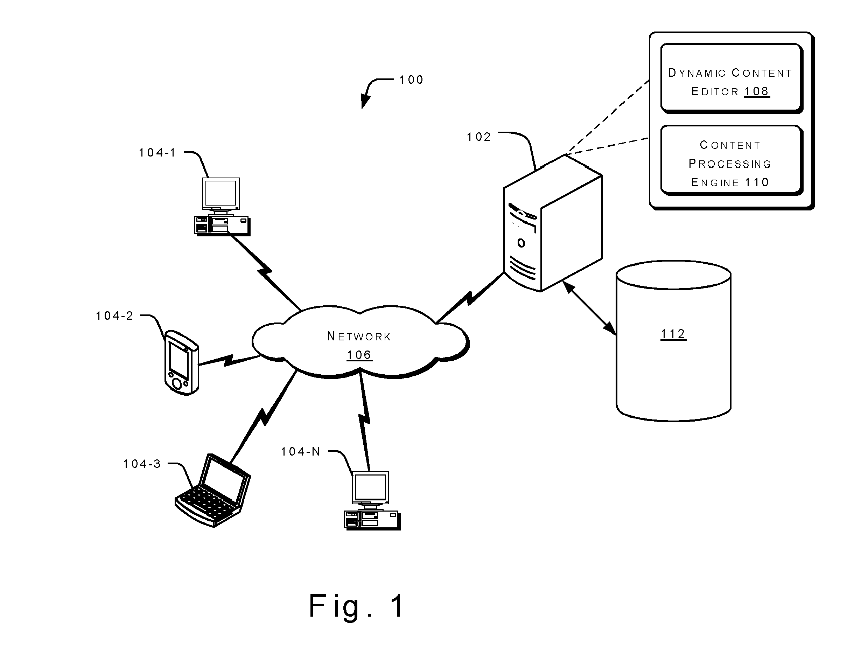

Fig. 1 illustrates a computing environment 100 implementing a content collaboration system 102, in accordance with an implementation of the present subject matter. The content collaboration system 102, hereinafter referred to as the system 102, can be implemented to curate content, such that the content are related to each other through various relationships, in order to facilitate collaboration amongst users. The system 102 can be implemented in a computing device, such as a server, a desktop, a laptop, a personal digital assistant, a smart phone, or the like.

The system 102 may be coupled to one or more computing devices 104-1, 104-2, ... , 104-N via a network 106. The computing devices 104-1, 104-2, ... , 104-N may hereinafter be collectively referred to as computing devices 104, and individually referred to as a computing device 104. The computing devices 104 may include, but are not restricted to, servers, desktops, laptops, personal digital assistants, smart phones, and the like. The network 106 may be a wireless network, wired network, or a combination thereof. The network 106 can be implemented as any of different types of networks, such as intranet, local area network (LAN), wide area network (WAN), the internet, and their combination. The network 106 may either be a dedicated network or a shared network, which represents an association of the different types of networks that use a variety of protocols, for example, Hypertext Transfer Protocol (HTTP), HTTP Secure (HTTPS), Transmission Control Protocol/Internet Protocol (TCP/IP), etc., to communicate with each other.

In an implementation, the computing environment 100 may be a collaboration environment, where the system 102 can provide for content collaboration, and the computing devices 104 may be user devices through which the content can be accessed and collaborated upon by users. In an implementation, the system 102 may also be used as a user device for content access.

Accordingly, system 102 can include a dynamic content editor 108 and a content processing engine 110. Further, the system 102 can communicate with a content repository 112, either directly or over the network 106. The content repository 112 can be a single database or multiple databases, which may be either co-located or distributed. In one example, the content repository 112 can provide for scalable content storage through one or more of HDFS, HBASE, RDBMS, or other types of databases and file systems.

In one example, the content repository 112 includes both content data and metadata and can store attachments like audio, video, etc. The content repository 112 can be designed to scale for large volumes of data, for example, using various big data techniques based on Apache Hadoop ecosystem for content data storage and data mining. Accordingly, the content repository 112 can also be used for processing of business logic on large volumes of contents spread across cluster of servers. In other examples, small scale content metadata/content data can be stored in traditional relational databases or local file systems.

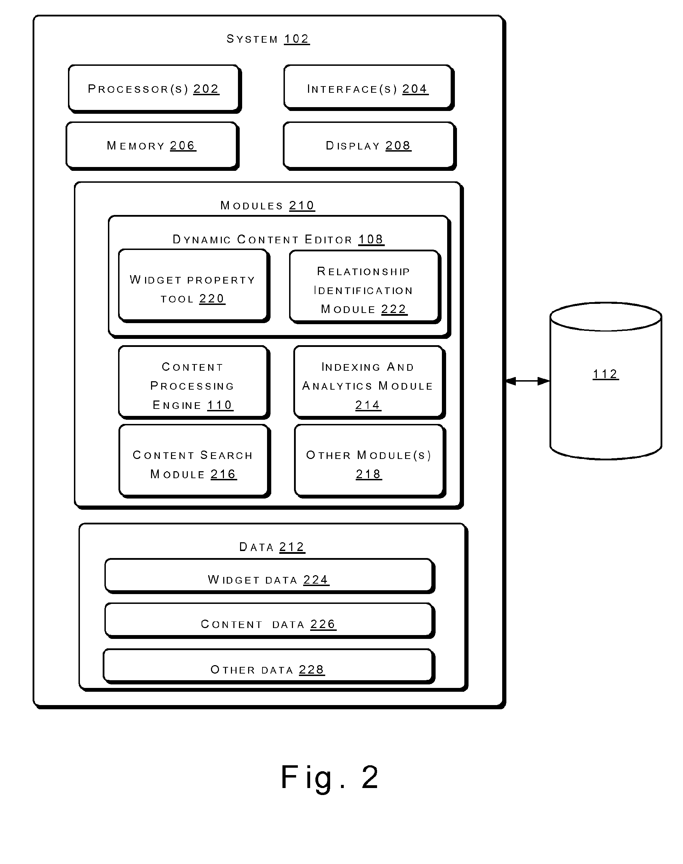

In operation, the dynamic content editor 108 can generate an interactive graphical user interface (GUI) for content curation. The dynamic content editor 106 can include various tools and interactive elements for receiving inputs from a user for relating contents and specifying the layout of how the curated contents can be displayed over the user interface. Based on the inputs received by the dynamic content editor 108 over the GUI and the data and metadata of the contents, the content processing engine 110 can build relationships between the contents in the content repository 112. For example, the content processing engine 110 can relate the content id of one content with that of the related content in the content repository 112 and can also indicate the type of relationship. Further, the content processing engine 110 can provide the curated contents to a user, based on the relationships and the layout of display specified. In one example, the content processing engine 110 can provide the contents in response to a search query. In another example, the content processing engine 110 can publish the curated contents on a web page, such as an enterprise web page or a social media web page. In one implementation, the related contents can also be indexed, analyzed, searched, and shared, as discussed in detail with reference to fig. 2.

Referring now to Fig. 2, in an implementation, the system 102 includes processor(s) 202. The processor(s) 202 may be implemented as microprocessors, microcomputers, microcontrollers, digital signal processors, central processing units, state machines, logic circuitries, and/or any devices that manipulate signals based on operational instructions. Among other capabilities, the processor(s) 202 fetch and execute computer-readable instructions stored in a memory or non-transitory computer readable medium.

The functions of the various elements shown in Fig. 2, including any functional blocks labeled as "processor(s)", may be provided through the use of dedicated hardware as well as hardware capable of executing non-transitory machine readable instructions. Moreover, the term processor may implicitly include, without limitation, digital signal processor (DSP) hardware, network processor, application specific integrated circuit (ASIC), field programmable gate array (FPGA), read only memory (ROM) for storing non-transitory machine readable instructions, random access memory (RAM), and non-volatile storage. Other hardware, conventional and/or custom, may also be included.

The system 102 also includes interface(s) 204. The interface(s) 204 may include a variety of machine readable instruction-based and hardware-based interfaces that allow the system 102 to interact with other devices, including web servers, data sources, and external repositories, for the purpose of generation of digital signatures and digitally signed documents. Further, the interface(s) 204 may enable the system 102 to communicate with other communication devices, such as network entities, over a communication network. The interface(s) 204 can also include machine readable instruction-based and hardware-based interfaces that allow the system 102 to interact with peripheral devices, such as a display, a keyboard, a mouse, etc., to provide various functionalities to a user, such as interactive GUIs, and to receive user inputs.

Further, the system 102 includes memory 206, coupled to the processor(s) 202. The memory 206 may include any computer-readable medium, for example, volatile memory (e.g., RAM), and/or non-volatile memory (e.g., EPROM, flash memory, etc.). In one implementation, the system 102 can include a display 208 or can be coupled to a display 208. In other implementations, the display 208 can be coupled to or a part of one or more of the user devices 104. Accordingly, in such implementations, the system 102 can generate a GUI and provide to a user device 104 for display over the display 208.

Further, the memory 206 can include or be coupled to module(s) 210 and data 212. The module(s) 210 may be coupled to the processor(s) 202. The module(s) 210, amongst other things, includes routines, programs, objects, components, data structures, and the like, which perform particular tasks or implement particular abstract data types. In one implementation, the module(s) 210 can include the dynamic content editor 108, the content processing engine 110, an indexing and analytics module 214, a content search module 216, and other modules 218. The dynamic content editor 108 can further include a widget property tool 220 and a relationship identification module 222. The other module(s) 218 further include modules that supplement applications on the system 102, for example, modules of an operating system.

The data 212 serves, amongst other things, as a repository for storing data that may be fetched, processed, received, or generated by the module(s) 210. In one implementation, the data 212 can include widget data 224, content data 226, and other data 228. The other data can correspond to data generated or used by other modules 218. Although the data 212 is shown internal to the system 102, it may be understood that the data 212 can reside in an external repository (not shown in the figures), which may be coupled to the system 102. The system 102 may communicate with the external repository through the interface(s) 204 to obtain information from the data 212.

Further, as mentioned earlier, the system 102 can communicate with the content repository 112, either directly or over a network, to receive data from, send data to, and edit data in the content repository 112.

The following description describes content curation and collaboration through the system 102, in accordance with an example implementation of the present subject matter. Content as used herein may be understood as digital contents.

In operation, a user can upload various contents, such as audio-video files, image files, text files, web pages, etc. into the content repository 112, either using the user devices 104 or the system 102. Further, the content repository 112 can also receive contents from other data sources (not shown in the figures), such as web servers, enterprise servers, etc. For the purpose of curation and collaboration of the contents, the dynamic content editor 108 can generate a GUI including interactive elements, such as tools and features, to enable a user to create and place related contents.

In one example, the widget property tool 220 in the dynamic content editor 108 allows a user to create widgets, i.e., executable applications that control respective display areas of a display screen in which contents are to be displayed. The widget property tool 220 also allows the user to select contents from the content repository 112 to be displayed in the widgets or upload new content into the content repository 112 for display in the widgets or use a combination of selected content and uploaded content. Further, using the widget property tool 220, the user can specify a layout of how the content is to be displayed in each of the widgets, for example, by providing properties like height, width, style, etc. of each widget in which the contents are to be displayed. The dynamic content editor 108 also provides for specifying a layout of how curated contents are to be displayed, for example, by allowing the user to drag and drop the widgets to place the widgets in the appropriate position, and allowing the user to add, remove or edit the widgets. The user inputs can be saved in widget data 224 and content data 226.

Further, the relationship identification module 222 in the dynamic content editor 108 allows the user to relate contents for curation and display based on the specified layout. For example, the user may select a content as a parent or child content by selecting the widget in which that content is to be displayed as parent or child. The parent content can further be the child of the other content. For example, "Vehicle" will be the parent of content "Car". The content "Car" can have contents like car images and its specifications of type. Further, the content "Car" can be child of content "Production & Commerce". "Production & Commerce" can be the parent of multiple contents like "Car", "Paper", "Pumps", etc., as each of these contents will have its own content corresponding to its production and commerce. Thus, relationships can be one-to-one, one-to-many, many-to-one, many-to-many.

In addition, a one-to-other or adoption relationship may be created, where the contents are associated for re-use without hierarchy, unlike a parent-child which is a hierarchical relationship. For example, a "Retail store" and a "Car company" can be two different parents having their list of child contents like product catalog, infrastructure and organization information, offerings, etc. If the Car company wants to have a Retail store in its premises it can adopt the Retail store contents under its offerings content. Thus the contents or "Retail Store" need not be created again, but can be reused and adopted. Further, in this case, the "Car Company" does not become a parent of the "Retail Store", but re-uses its contents.

In one implementation, the relationship identification module 222 can additionally use results of analysis, such as semantic analysis, statistical analysis, and collaborative filtering analysis, performed by the indexing and analytics module 214 for suggesting relationships between contents. For example, if statistically, most viewers who viewed a particular content also viewed or commented on another content that is not related to it in the content repository 112, the relationship identification module 222 can suggest to the user, through the GUI provided by the dynamic content editor 108, that these contents may be related. The user can accordingly provide inputs on whether these contents are to be related or not.

In addition to relating the contents, the relationship identification module 222 can allow a user to specify a content type from amongst a base type or curated type. Base contents are the individual content like image, file, text, audio or video. Curated contents are the actual collaborated contents with text, image, audio, video, etc., that are related to each other, and includes a list of base contents or any other curated content associated with it.

On receiving the user inputs through the widget property tool 220 and the relationship identification module 222, the dynamic content editor 108 can provide the user inputs to the content processing engine 110 to store the contents and automatically update the content relationship and the hierarchy in the content repository 112. The user inputs can also be saved in widget data 224 and content data 226. This enables the user to curate contents, reuse the curated content and search, view, and update it accordingly.

In one implementation, the content processing engine 110 can build the relationships between contents based on the user inputs, the data in the contents, and the metadata of the data. For example, the content processing engine 110 can relate the content id of one content with that of the related content in the content repository 112 and can also add information to indicate the type of relationship. Further, the content processing engine 110 can also leverage advanced text mining techniques to automatically establish relationships between contents having similar textual meaning in the data and metadata. In one implementation, when the contents and relationships are updated, version numbering is also performed by the content processing engine 110 for tracking the updates made in the content repository 112. In one example, the content processing engine 110 can also secure the contents in the content repository by user authentication process, such as password verification, before updating the relationships and the contents in the content repository 112.

Once the content processing engine 110 stores the relationships and contents in the content repository 112, the indexing and analytics module 214 can index the contents for faster search and processing. For example, the indexing and analytics module 214 can use enterprise search platforms like Apache SOLR to index all contents, including both structured and unstructured data, along with metadata for faster content retrieval. In other examples, other indexing and search platforms may be used depending on the enterprise information technology (IT) infrastructure design and to ensure policy compliance and interoperability with other entities in the IT infrastructure.

In addition, the indexing and analytics module 214 can analyze the content repository 112 using techniques, such as analysis, such as semantic analysis, statistical analysis, and collaborative filtering analysis, and can also determine various content relationship metrics. For example, one metric can be "Relationship Depth" that identifies the number of levels or depth that the content relations have. For example, if content C1 is a parent of content C2 which is in turn a parent of content C3, then C1 has a relationship depth of 2 with content C3. Thus, relationship depth provides an indication of how structured the content relationships are in the content repository 112. Another metric can be "Most Frequent Content Type Association" using which it can determine that, for example, C1 has maximum relationships of content type Video. Yet another metric can be "Most Used Content" which can indicate content which is most referred by other contents. This can help to determine the popularity of the contents. Another example of a metric can be "Percentage of Textual Meaning Similarity in Contents", using which the content processing engine can help identify similar contents from repository and prompt users for relating contents. Similarly, "Content Categorization based on Metadata" can help identify content clusters and categorization, which can help in content search and suggest content relationships for future content curation.

In operation, when a viewer, i.e., a user with access rights to search and view contents from the content repository 112, would like to perform a search, the content search module 216 provides a search interface to the viewer. The content search interface can allow the viewer to conduct a search on the contents in the contents repository 112 based on key words, or a content type, such as base (image/video/audio/etc.) or curated, or a combination of the two. The content search module 216 can then perform the search in the content repository 112 and can provide a list of the search results to the content processing engine 110 for providing to the user.

To list the contents in most relevant order, the content processing engine 110 can use the metrics determined by the indexing and analytics module 214 and can provide the search results based on the search query to the viewer. Further, the content processing engine 110 can provide the search results based on the layout of display specified by the user earlier using the dynamic content editor 108. Thus, the results can be provided in an easy to understand form.

In one example, the layout of display specified by the user may be stored as a template in the content repository 112 and can be re-used for creating new or related curated contents. The present systems and method thus allow for curation and providing of relevant curated contents efficiently to users irrespective of type of content and also allow for dynamic content relation.

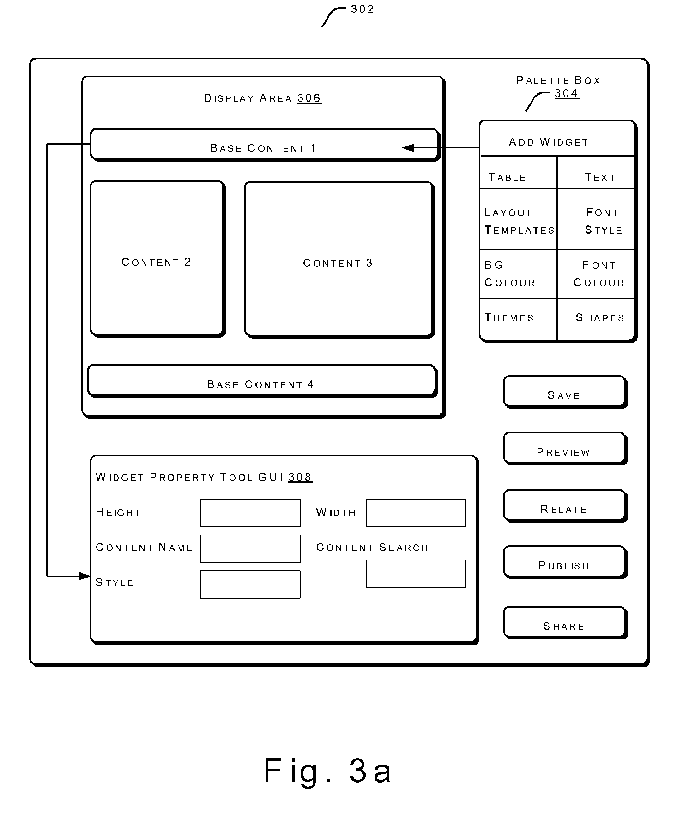

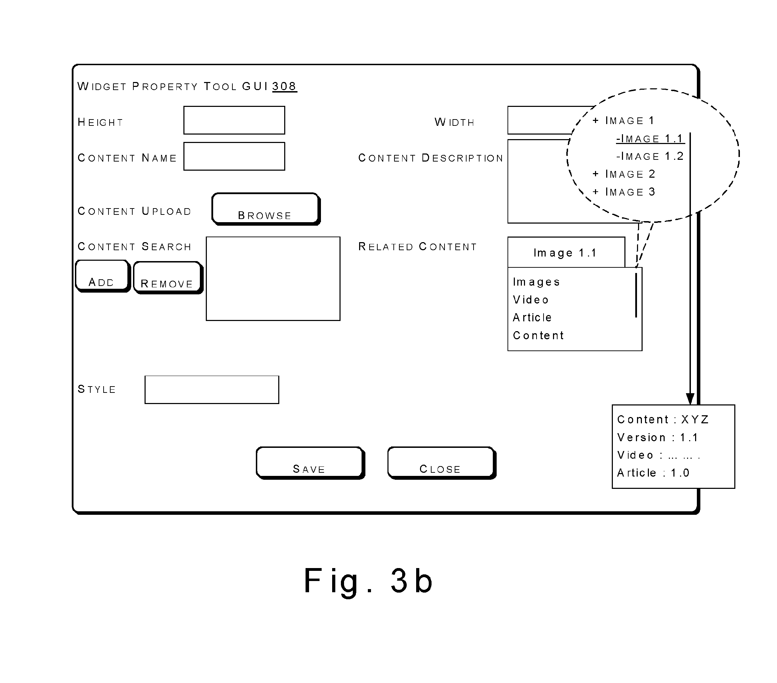

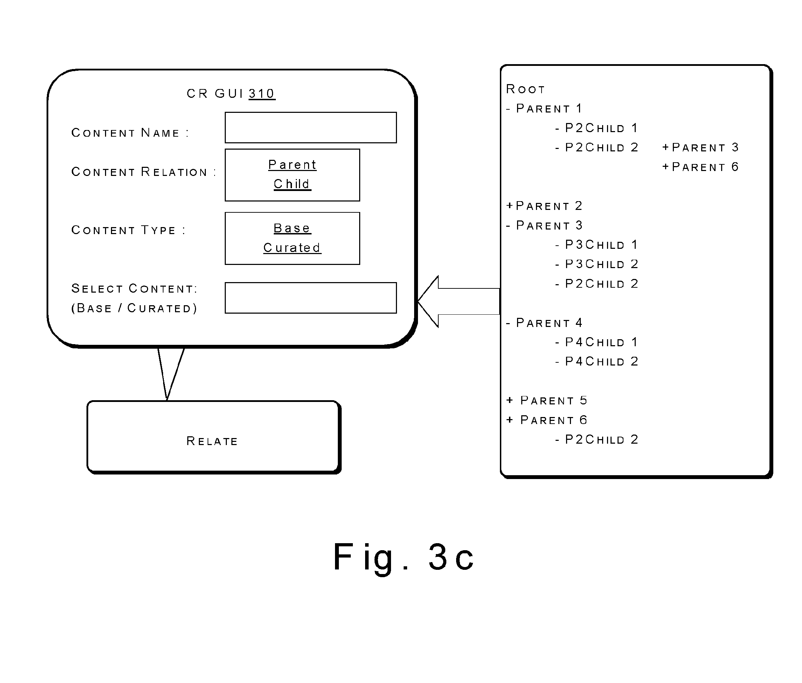

Figs. 3a, 3b, and 3c illustrate example graphical user interfaces (GUIs) for content collaboration, in accordance with an implementation of the present subject matter.

Fig. 3a illustrates a dynamic content editor (DCE) GUI 302 provided by the dynamic content editor 108 for addition of widgets, selection and/or uploading contents, and specifying widget properties and content relationships. As shown, the DCE GUI 302 includes a palette box 304 to add one or more widgets in a display area 306. The widgets can be positioned by dragging and dropping the widgets in the display area. Further, the widget properties, such as content name, search/ upload content, relate, tag relations (root / parent), height, width, style, etc., can be edited using a widget property tool (WPT) GUI 308, as will be discussed with reference to Fig. 3b. Based on the inputs received through the DCE GUI 302, the contents and relationships can be updated in the contents repository 112. In one example, the DCE GUI 302, allows includes interactive elements, such as buttons, to preview, publish, and share the curated contents.

Fig. 3b illustrates an example WPT GUI 308 generated by the widget property tool 220. As shown, the WPT GUI 308 allows a user to specify various widget properties and search/ upload content to be displayed in the widget. For example, the user can specify content name and accordingly, the content processing engine 110 can determine a content id for the content name. Further, user can specify height, width, and style of the widget in which the content will be displayed, provide content description, and select related content. In one example, when the user attempts to save the contents, a content relation (CR) GUI opens in a new pop-up window to allow the user to specify the content relationships for curation. In another example, the CR GUI may be provided on the same display window.

Fig. 3c illustrates an example CR GUI 310 generated by the relationship identification module 222 for content curation when the user saves the inputs provided through the WPT GUI 308. As shown, the CR GUI 310 allows the user to specify content relation and content type.

In one example, on saving the contents and the relationships, the content processing engine 110 can generate an XML file for the curated content that includes the different related contents for a particular topic. The curated XML file can include the identifiers of the parent and child contents, their content types, and associated files/ data, and the layout specified by the user using the dynamic content editor 108. Thus, when a user searches for the particular topic, curated content can be rendered based on the XML file. Based on the XML and the specified layout of the content, the GUI can be generated and displayed.

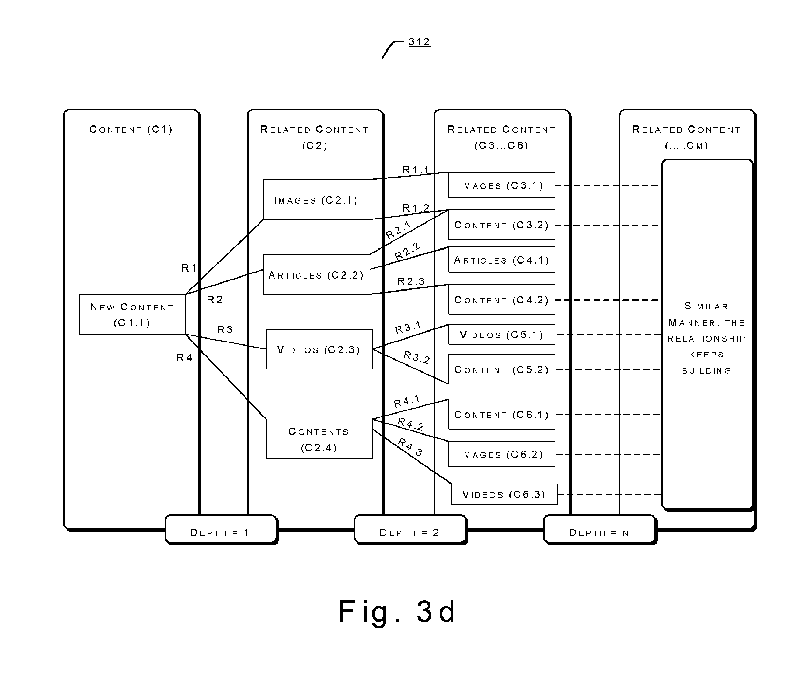

Fig. 3d illustrates example content relationship map 312, which can be generated by the indexing and analytics module 214 for representing example content relationships in a content repository, in accordance with an implementation of the present subject matter. As shown in the content relationship map 312, Content C1 is related to Content C2.1 by relationship R1, which is one to one relationship and could be a parent-child relationship. Content C2.1 is in turn related with Content C3.1 by relationship by R1.1, which is again one to one relationship here. Further, it will be understood that the contents C1, C2.1, etc. can themselves be either base content, for example, individual files of type text, image, audio, video, webpage, etc., or curated content, for example, XML curated file of base files. Further, based on the content relationship map, relationship depth can also be determined. For example, a relationship depth between contents can be determined by checking the number of relationship hops it takes to reach to that content. In the map 312, Relationship Depth = 1 for Relations R1, R2, R3, R4 between Contents C1 and C2; whereas Relationship Depth = 2 for Relations between Contents C1 and C3, C4, C5, C6. As it requires 2 relationship hops R1, R2, ...and R1.1, R1.2, R2.1, R2.2........, R4.1, R4.2, R4.3. Accordingly, a relationship depth of n hops can be present in the content repository, based on which thee depth metric can be determined.

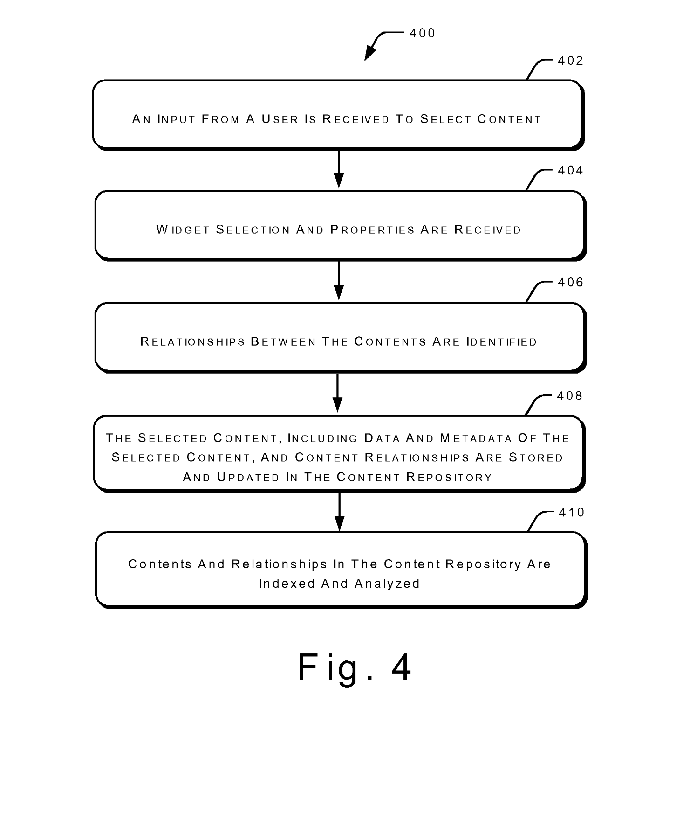

Referring now to Fig. 4, which illustrates a method 400 for content curation and collaboration, in accordance with an implementation of the present subject matter. The order in which the method 400 is described is not intended to be construed as a limitation, and any number of the described method blocks can be combined in any order to implement the method 400, or an alternative method.

At block 402, an input from a user is received to select content. The content may either be new content, in which case the content can be uploaded into the content repository 112 and selected, or existing content, in which case the content can be searched from the content repository 112 can selected. In an implementation, the system 102 receives the input from the user to select the content using the dynamic content editor 108.

At block 404, widget selection and properties are received. In one example, the widget property tool 220 allows a user to specify a layout in which the content will be displayed and add various properties to the widgets, such as content name, widget height, width, and style, content type, etc. Content type can include basic content, which are indicative of an individual content, such as a video file, an audio file, a text file, and an HTML page, and curated content, which are indicative of a collaboration of multiple basic contents.

At block 406 relationships between the contents are identified. In an implementation, the relationship identification module 222 allows a user to specify relationships between the selected content and existing content. Further, the relationship identification module 222 can also provide suggestions, based on various analytics, for relating contents. In one example, the contents can be related as parent-child content with the child content itself being the parent for other content. Thus, multi-level hierarchical relationships can be defined.

At block 408, the selected content, including data and metadata of the selected content, and content relationships are stored and updated in the content repository 112. In one implementation, the content processing engine 110 builds the relationships and content data and metadata in the content repository 112 based on the user inputs received from the dynamic content editor 108.

At block 410, the contents and relationships in the content repository 112 can be indexed and analyzed for faster search and for determining various relationship metrics and providing suggestions for enhancing the usability of the content repository 112 based on the metrics.

The contents thus curated for collaboration can be made available to viewers, for example, when a viewer searches for contents related to a particular topic, or by publishing on various social media and social business tool sites. Thus, contents can be easily assimilated in a platform independent manner irrespective of content type and relevant curated information can be provided easily to viewers. Further, new content can be dynamically added to the repository and existing content can be re-used in new relationships, thereby reducing duplication of content substantially.

Although implementations for the methods and the systems have been described in language specific to structural features, it is to be understood that the present subject matter is not necessarily limited to the specific features described. Rather, the specific features are disclosed as implementations for the methods and the systems for content collaboration.

## Claims

1. A system (102) for collaborating content, the system comprising:
a processor (202);
a dynamic content editor (108) coupled to the processor (202) to generate a graphical user interface including interactive elements for receiving user inputs for relating contents in a content repository (112) and specifying a layout of display of curated contents; and
a content processing engine (110) coupled to the processor (202) to
build relationships between the contents in the content repository (112), based on the user inputs and data and metadata of the contents; and
provide the curated contents to a user based on the relationships and the specified layout of display.

2. The system (102) of claim 1, wherein the dynamic content editor (108) comprises a widget property tool (220) for selecting a content, selecting a widget for displaying the content, and providing widget properties for the widget, and wherein the selecting the content includes one of searching the content in the content repository (112) and uploading the content in the content repository (112).

3. The system (102) of claim 1, wherein the dynamic content editor (108) comprises a relationship identification module (222) for receiving the user inputs for relating the contents and providing suggestions to the user based on analytics of the relationships, data, and metadata in the content repository (112).

4. The system (102) of claim 1, further comprising an indexing and analytics module (214) coupled to the processor (202) to index the contents in the content repository (112) and determine relationship metrics from the content relationships.

5. The system (102) of claim 4 wherein the relationship metrics includes a relationship depth indicative of number of hops between a parent content and a child content.

6. The system (102) of claim 1, wherein the contents comprise one or more of text files, audio files, video files, image files, data from social media, HTML pages, and XHTML files, and the curated content comprises the contents identified as being related.

7. The system (102) of claim 1, further comprising a content search module (216) to search for related contents based on a search query and provide the related contents to the content processing engine (110).

8. A method for content collaboration, the method comprising:
receiving user inputs to select a content in a content repository (112), wherein the selecting includes one of searching for the content and uploading the content;
receiving selection of a widget and properties of the widget indicative of layout of display of the content;
identifying relationships between the content and one or more other contents in the content repository (112);
updating the content and the relationships in the content repository (112); and
providing the content and related contents to a viewer based on the layout of the display.

9. The method of claim 8 wherein the widget properties include height, width, style, and position.

10. The method of claim 8 further comprising indexing the content repository (112) and performing analytics on contents in the content repository (112) to determine relationship metrics.

11. The method of claim 8 wherein the identifying the relationships includes at least one of receiving the relationships from a user and providing suggestions to the user based on analysis of the contents in the content repository (112).

12. The method of claim 8 wherein the relationships include a parent-child relationship and an adoption relationship, wherein the parent-child relationship is a hierarchical relationship selected from one-to-one, one-to-many, many-to-one, and many-to-many, and wherein the adoption relationship is a one-to-other non-hierarchical relationship.

13. The method of claim 8 wherein the providing the content and the related contents is based on a search query executed on the content repository (112).

14. A non-transitory computer readable medium comprising instructions executable by a processor to:
receive user inputs to select a content in a content repository (112), wherein the selecting includes one of searching for the content and uploading the content;
receive selection of a widget and properties of the widget indicative of layout of display of the content;
identify relationships between the content and one or more other contents in the content repository (112);
update the content and the relationships in the content repository (112); and
provide the content and related contents to a viewer based on the layout of the display.

15. The non-transitory computer readable medium of claim 14 further comprising instructions to index the content repository (112) and perform analytics on contents in the content repository (112) to determine relationship metrics.
